# EUROPEAN PATENT SPECIFICATION

(11) **EP 2 423 040 B1**
(45) Date of publication and mention of the grant of the patent: **04.10.2017**
(21) Application number: 10008782.4
(22) Date of filing: 24.08.2010
(51) Int. Cl.: B60N 2/56, A61G 7/057

(54) **An insert for ventilating a vehicle seat**
Einsatz zur Belüftung eines Fahrzeugsitzes
Insert de ventilation d'un siège de véhicule

(43) Date of publication of application: 29.02.2012
(73) Proprietor: I.G. Bauerhin GmbH, 63584 Gründau (DE)
(72) Inventor: Axakov, Dmitri, Windsor N9E4B2 Ontario (CA); Trimbakrao, Joshi Raghvendra, Windsor N8X4H1 Ontario (CA)
(74) Representative: Grimm, Ekkehard

(56) References cited:
- US-A1- 2004 177 450
- US-A1- 2009 243 350

## Description

### TECHNICAL FIELD

This invention relates to an insert for ventilating a vehicle seat and to a ventilated vehicle seat.

### BACKGROUND OF THE INVENTION

It is known in the art relating to vehicle seating comfort systems, and particularly to ventilated vehicle seats, to position a ventilated insert between an air permeable seat trim cover and the seat cushioning element in the seat and in the seat back. Usually the insert is placed into a recess in the cushioning element, in such a way that its upper surface is flush with the surrounding surface of the cushioning element. Normally such an insert is made of an air permeable but compressible material and referred to as a spacer.

Normally this spacer is a material layer that is enclosed in a sufficiently air tight envelope having two layers. A lower layer faces the cushioning element and an upper layer is oriented towards the seat cover. The envelope is sufficiently sealed around the spacer material perimeter. The upper layer has apertures at optimized locations having optimized sizes to provide an even ventilation sensation to a seat occupant.

The lower layer normally has at least one opening sufficiently aligned with an opening in the cushioning element. An air mover communicates air fluidly with the space inside the ventilated insert through this opening. The air mover port may be attached to the insert lower layer surrounding the opening in the layer, may be attached to the spacer material or may be installed inside the cushion element opening or even installed a distance from the cushioning element and be connected via bellows or another ducting-like elements. A vehicle air conditioning system may also be used as the air mover: then some air ducting needs to be provided to supply the air to the insert.

The air mover may pump air into the insert or pull air from the insert. When the air mover is turned ON the air is pushed toward or pulled from the air permeable seat trim through the insert spacer material and vents in the ventilated insert so the occupant may feel the ventilation action.

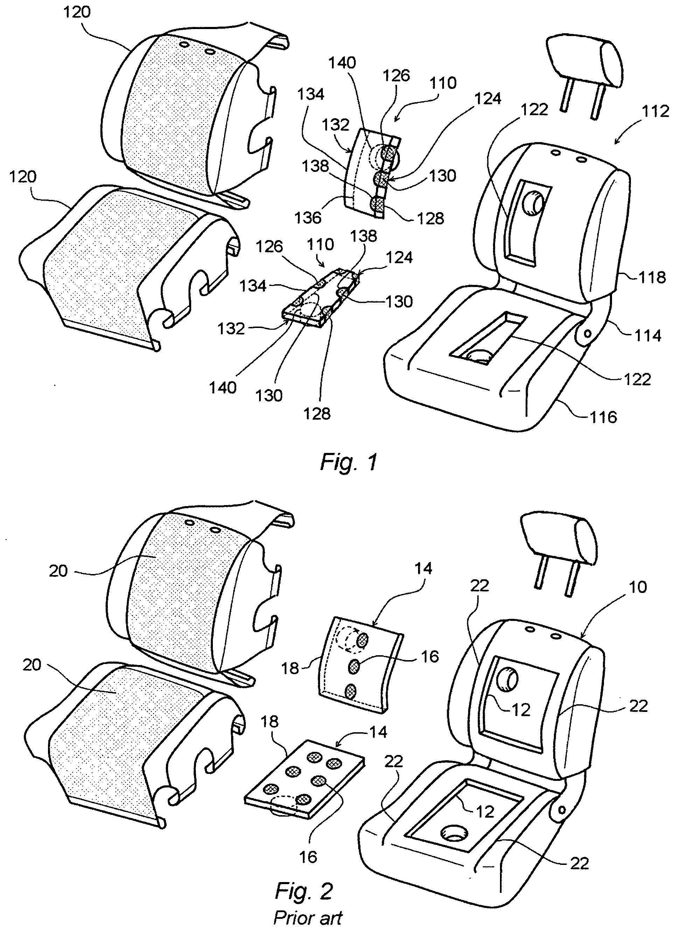

FIG. 2 schematically illustrates a prior art seat 10 and a ventilated area 12 ventilated by a conventional insert 14 that has a plurality of apertures 16 on a top surface 18 facing a seating surface 20. Because a vast majority of vehicles have trenches 22 in their seats 10, the conventional design limits the ventilation effect to the seat (and/or seat back) specific section in which the insert 14 is installed. As there are seams in the seat trim cover and trenches arranged under these seams, air cannot penetrate into adjacent sections behind the trench. Thus, each section requires a separate ventilated insert 14 with a separate air mover.

Also, a conventional ventilated insert covers generally an entire seat section where it is installed which eliminates the normal breathability of the seat when the air mover is turned off or broken. This causes moisture to build up many times faster than in similar seat configurations not equipped with a ventilation system.

Spacer material satisfying automotive standards is relatively expensive and the cost is especially noticeable when additional sections of ventilation are required. The spacer material is also generally not recyclable.

Air movers must often be installed in the cushioning element and such fans must be of higher quality / cost to reduce unpleasant vibration. So it is also desirable to reduce the air mover quantity.

The US 2009/0243350 A1 describes a vehicle seat with a seat pad. The seat pad includes a plurality of ditches on the surface of a seat pad, wherein the seat pad is made by a foaming material covered by a trim cover. These ditches are covered by a first plate and a second plate both are composed of plates of non-breathability consisting of synthetic resin plates. The first and the second plate can also be formed as one body.

### SUMMARY OF THE INVENTION

An insert according to the invention is disclosed in independent claim 1. Preferred embodiments of the insert are claimed in the dependent claims.

The present invention provides an improved insert for ventilating a vehicle seat having indents or trenches under seat trim seams. In one embodiment, called below as a second embodiment, the insert is sized to fit fully between the indents or trenches between bolsters in a seat or seat back and ventilate around the periphery of the insert adjacent the indent(s) allowing air to be directed through areas beyond the indents and ventilating a greater seating area than a conventional insert. The present invention also provides air flows where resistance to air flows is less than in the general seating surface. Also, the present invention reduces the moisture build-up in the seat. The present invention also may reduce the number of inserts required to ventilate a vehicle seat having many indents and bolsters.

More particularly, an insert for ventilating a vehicle seat having a frame and cushioning supported on the frame covered by an air permeable cover covering the cushion includes an air permeable spacer having a top surface for facing the cover, a bottom surface for disposition in a recess in the cushioning, and an edge surface between the top and bottom surfaces. A non-air permeable spacer cover covers the spacer. At least one opening disposed peripherally around the edge surface of the spacer communicates air through the opening. An air supply opening in the cover aligned adjacent the bottom
surface communicates air through the spacer material and the plurality of spaced openings in the cover. The cushioning may be of a shape having a main seating portion and bolsters adjacent the main seating portion, and a trench that is defined at an interface of the main seating portion and the bolster. The insert may be sized to extend to adjacent the trench whereby the main seating portion and the bolsters are ventilated.

The non-air permeable spacer-cover may be a plastic material or a very poor air permeable non-woven material. The non-air permeable spacer cover may include a plurality of spaced openings aligned peripherally around the edge surface for communicating air through the openings. The non-air permeable spacer-cover may include a top portion disposed adjacent the top surface and a bottom portion disposed adjacent the bottom surface. The top and bottom portions may be joined peripherally, and each peripherally disposed opening may be one of an indent in the top portion, an indent in the bottom portion, or an indent in both the top and bottom portions.

A method of manufacturing a ventilation insert includes the steps of: providing an insert for ventilating a vehicle seat, said seat having a frame, cushioning supported on said frame and an air permeable cover covering said cushion; said insert comprising:
an air permeable spacer having a top surface for facing said covering, a bottom surface for disposition in said cushioning, and an edge surface between said top and bottom surfaces; and
a non-air permeable spacer-cover for covering said spacer;
said non-air permeable spacer-cover including a plurality of spaced openings aligned peripherally around said edge surface of said spacer for communicating air through said openings, and also an air supply opening aligned adjacent said bottom surface for communicating air there through said spacer material.

These and other features and advantages of the invention will be more fully understood from the following detailed description of the invention taken together with the accompanying drawings.

### BRIEF DESCRIPTION OF THE DRAWINGS

In the drawings:
FIG. 1 is an exploded view of a seat including a ventilation insert in accordance with a first embodiment of the present invention;
FIG. 2 is an exploded view of a seat having a ventilated area ventilated by a conventional insert according to the prior art;
FIG. 3 is a schematic view illustrating a comparison between the first embodiment of the present insert and a conventional prior art insert;
FIG. 4 is a plan view of a conventional ventilated seat cushion according to the prior art;
FIG. 5 is a plan view of a ventilated seat cushion in accordance with a second embodiment of the present invention;
FIG. 6 is a schematic view illustrating a method of fabricating a ventilation insert in accordance with the present invention;
FIG. 7 is a schematic view illustrating an alternative method of fabricating a ventilation insert in accordance with the present invention;
FIG. 8 is a perspective view of an alternative embodiment of a ventilation insert in accordance with the present invention;
FIG. 9 is a perspective view of another alternative embodiment of a ventilation insert in accordance with the present invention; and
FIG. 10 is a partial sectional view of a seat including the ventilation insert in accordance with the second embodiment of the present invention.

### DETAILED DESCRIPTION OF THE INVENTION

Referring now to the drawings in detail, numeral 110 generally indicates a ventilation insert for ventilating a vehicle seat 112 in accordance with a first embodiment of the present invention. As shown in FIG. 1, the seat 112 includes a frame 114, a seat cushion 116 and seat back 118 supported on the frame, and an air permeable cover 120 covering each of the cushions. A separate insert 110 is provided for the seat cushion 116 and seat back 118, and the seat cushion and seat back may include a recess 122 for the insert.

The insert 110 includes an air permeable spacer 124 having a top surface 126 for facing the set cover 120, a bottom surface 128 for disposition in the seat cushion 116 or seat back 118, and an edge surface 130 between the top and bottom surfaces. The spacer 124 may be made of a plastic material or similar such as a 3D woven structure (for example, Müller textiles) or a highly permeable reticulated foam material. A non-air permeable spacer cover 132 covers the spacer 124. The cover 132 includes a top portion 134 disposed adjacent the spacer top surface 126 and a bottom portion 136 disposed adjacent the spacer bottom surface 128. The cover 132 also includes at least one spaced opening 138 that is generally disposed peripherally around the edge surface 130 of the spacer for communicating air through the opening(s). At least one air supply opening 140 is also aligned adjacent the spacer bottom surface 128 for communicating air there through the spacer material 124 via an air mover. Thus, more than one air mover may be in communication with the spacer material through corresponding air supply opening(s) 140 in the cover 132.

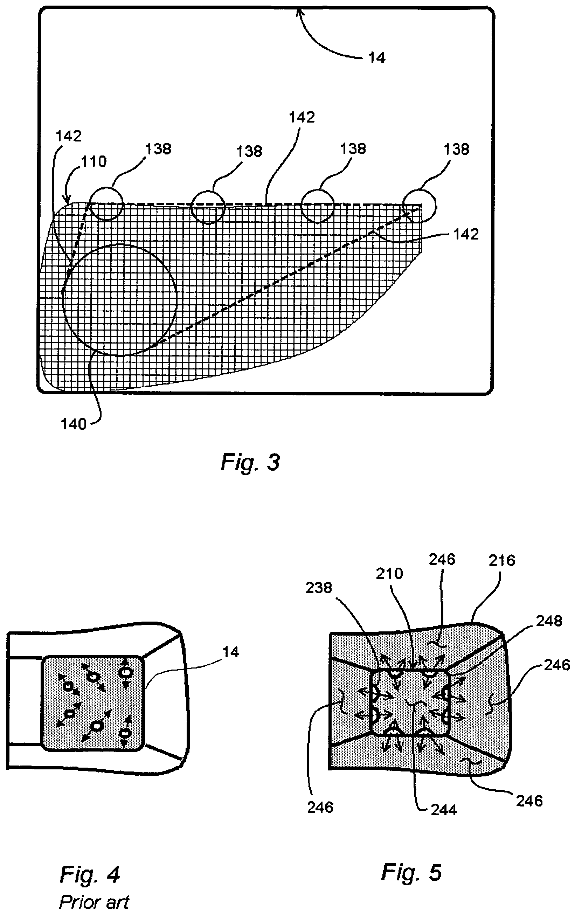

As shown schematically in FIG. 3, in the first embodiment the size and therefore the surface area of the insert 110 is minimized in comparison to a prior art insert 14 for an equivalent application. The insert 110 thereby requires less spacer material than prior art inserts, which reduces the cost of the insert. Also, since the insert covers less surface area of the seat cushion, the insert 110 causes less moisture build-up than prior art inserts.

In this embodiment, the spacer material edge surface 130 should be shaped and positioned in such a way that it crosses and/or is aligned with desired venting location(s) in the seat 112. The opening(s)/vent(s) 138 in the spacer-cover 132 are also disposed in the desired vent locations. The outer perimeter of the spacer material should be no smaller than a geometric figure created by straight lines 142 outlining the vent openings 138 and air supply opening 140. For better performance (e.g., reduced hydraulic resistance), the spacer material may be made larger in area such that the insert 110 is both wider and longer around the air supply opening 140, especially if the opening 140 is not surrounded by vent openings 138.

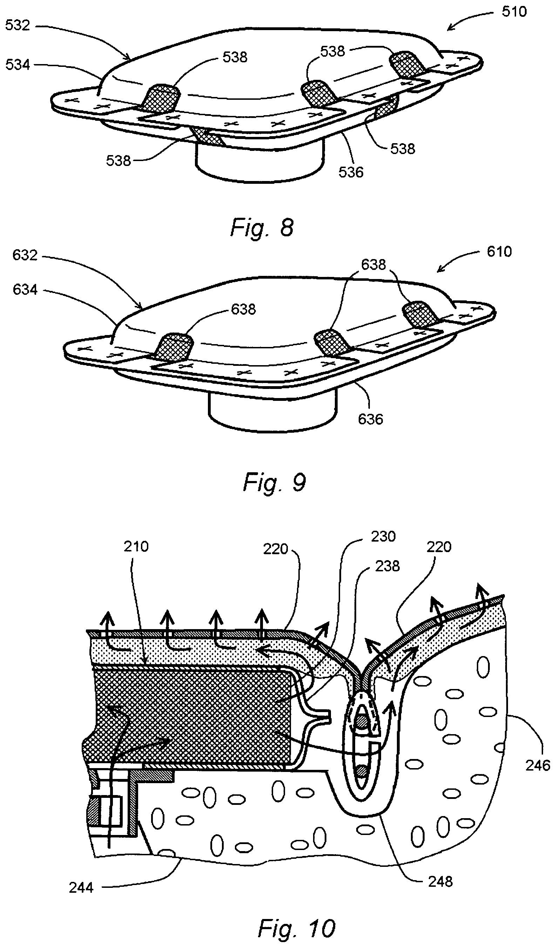

Turning to FIGS. 5 and 10, in a second embodiment the insert 210 ventilates additional seat trim partitions of the seat that are adjacent a main ventilated seating portion. Thus, the main (e.g., center) seating portion of the seat may be made smaller in size, and the relatively small insert 210 is capable of ventilating a relatively large seat area. For example, the seat cushion 216 may be of a shape having a main seating portion 244 and bolsters 246 adjacent the main seating portion. A trench 248 is defined at an interface of the main seating portion 244 and the bolsters 246. The insert 210 is sized to extend to a location adjacent the trench 248 and/or seams in the seat cover 220 such that the vent opening(s) 238 along the spacer edge 230 are adjacent the trench 248. In contrast to the prior art shown in FIG. 4 in which the insert 14 only ventilates a main seating portion of the seat, in the present invention the main seating portion 244 and the bolsters 246 are ventilated by the insert even though the insert is not disposed in the area of the bolsters.

Many vehicle seats have a small central main zone that is smaller than the imprint of a human body when seated, and the seats additionally have extensive bolster, thigh, and upper back portions. These portions typically contain motors and safety features and have little or no free space for ventilation inserts and fans or other air movers. Therefore, commonly these portions are not ventilated and a significant surface area of the seat contacted by an occupant is left unventilated. The present insert 210 advantageously ventilates these adjacent seat trim portions that are otherwise difficult to ventilate directly by directing air toward the trench in the seat cushion so that the air can penetrate into the adjacent seat portions.

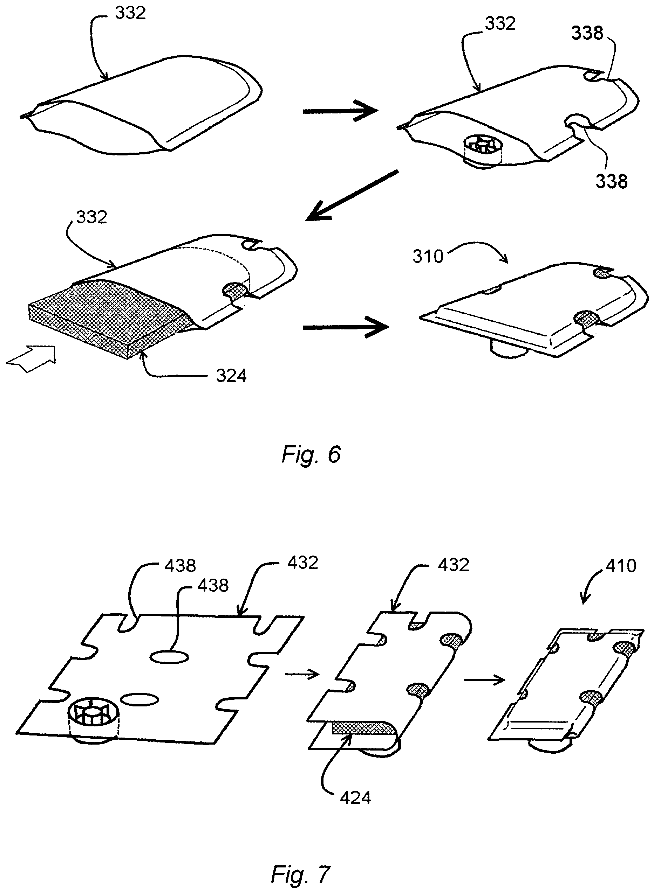

Turning to FIG. 6, a method of fabricating an insert 310 may include forming the spacer cover 332 into a pocket or pouch bag from a sheet or sheets of cover material. The vent openings 338 are then formed by making cutouts in the edges of the spacer-cover 332 before the spacer material 324 is inserted into the open end of the pocket. The vent openings 338 are therefore formed in both the top portion and bottom portion of the spacer-cover 332, and the cutouts in the top and bottom portions are aligned. After insertion of the spacer material, the open end of the pocket is sealed to envelope the spacer 324 in the cover 332.

With reference to FIG. 7, an alternative method of fabricating an insert 410 may include initially forming vent openings 438 in a sheet of material which will form the spacer-cover 432. The spacer-cover 432 sheet is then wrapped around the spacer material 424 and the adjacent edges of the spacer-cover 432 are sealed together to envelope the spacer material in the cover. The vent openings 438 are cut in the cover 432 such that when the cover sheet is folded and wrapped around the spacer material 424, the vent opening cutouts are formed in both the top portion and bottom portion of the cover, the cutouts in the top portion are aligned with the cutouts in the bottom portion.

Turning to FIG. 8, in an embodiment of the present invention, the insert 510 may include vent openings 538 in a top portion 534 of the spacer cover 532 and vent openings 538 in a bottom portion 536 of the spacer cover 532 which are not aligned (i.e., offset) from the openings in the top portion. In another embodiment shown in FIG. 9, the insert 610 may have vent openings 638 only in the top portion 634 of the spacer cover 632. Alternatively, the vent openings may be formed only in the bottom portion 636 of the spacer-cover 632.

## Claims

1. An insert (110; 210; 310; 410; 510; 610) for ventilating a vehicle seat (112) provided for inserting into a recess (122) in a seat cushion (116; 216) or a seat back (118), said insert (110; 210; 310; 410; 510; 610) comprising an air permeable spacer (124; 324; 424;) having a top surface (126), a bottom surface (128) and an edge surface (130; 230), wherein the spacer (124; 324; 424) is covered by a non-air permeable spacer-cover (132; 332; 432; 532; 632) like a pocket or a pouch bag having a top portion (134; 534; 634) disposed adjacent said top surface (126) and a bottom portion (136; 536; 636) disposed adjacent said bottom surface (128) of the insert and wherein said non-air permeable spacer-cover (132; 332; 432; 532; 632) includes at least one opening (138; 238; 338; 438; 538; 638), **characterized in that** the at least one opening (138; 238; 338; 438; 538; 638) being disposed peripherally around said edge surface (130; 230) of said spacer (124; 324; 424) for communicating air through said opening (138; 238; 338; 438; 538; 638), such that the at least one opening or each of said peripherally disposed openings (138; 238; 338; 438; 538; 638) is one of an indent of said top portion (134; 534; 634), an indent in said bottom portion (136; 536: 636), and an indent in both said top (134; 534; 634) and bottom portions (136; 536; 636).

2. The insert (110; 210; 310; 410; 510; 610) of claim 1, **characterized in that** said top (134; 534; 634) and bottom portions (136; 536; 636) are joined peripherally. 310311_A1

3. The insert (110; 210; 310; 410; 510; 610) according to claim 1 or claim 2 **characterized in that** said non-air permeable spacer-cover (132; 332; 432; 532; 632) comprises a plastic material or a very poor air permeable non-woven material.

4. The insert (110; 210; 310; 410; 510; 610) according to claim 1, **characterized in that** said non-air permeable spacer-cover (132; 332; 432; 532; 632) includes also at least one air supply opening (140) aligned adjacent said bottom surface (128) for communicating air there through said spacer material (124; 324; 424).

5. The insert (110; 210; 310; 410; 510; 610) of claim 4. **characterized in that** said non-air permeable spacer-cover (132; 332; 432; 532; 632) comprises a plastic material or a very poor air permeable non-woven material.

6. A ventilated vehicle seat (112) having a frame (114), a cushioning with a seat cushion (116; 216) and a seat back (118) supported on said frame and an air permeable cover (120; 220) covering said cushion (116; 216; 118), and an insert (110; 210; 310; 410; 510; 610) positioned in a recess (122) in said seat cushion (116; 216) and/or said seat back (118), said insert (110; 210; 310; 410; 510; 610) comprising an air permeable spacer (124; 324; 424) having a top surface (126), a bottom surface (128) and an edge surface (130), wherein the spacer (124; 324; 424) is covered by a non-air permeable spacer-cover (132; 332; 432; 532; 632) like a pocket or a pouch bag having a top portion (134; 534; 634) disposed adjacent said top surface (126) and a bottom portion (136; 536; 636) disposed adjacent said bottom surface (128) of the insert and wherein said non-air permeable spacer-cover (132; 332; 432; 532; 632) includes at least one opening (138; 238; 338; 438; 538; 638), **characterized in that** the at least one opening (138; 238; 338; 438; 538; 638) being disposed peripherally around said edge surface (130) of said spacer (124; 324; 424) for communicating air through said opening (138; 238; 338; 438; 538; 638), such that the at least one opening or each of said peripherally disposed openings (138; 238; 338; 438; 538; 638) is one of an indent of said top portion (134; 534; 634), an indent in said bottom portion (136; 536; 636), and an indent in both said top (134; 534; 634) and bottom portions (136; 536; 636).

7. The vehicle seat (112) according to claim 6, **characterized in that** the spacer-cover (132; 332; 432; 532; 632) includes also at least one air supply opening (140) aligned adjacent said bottom surface (128) for communicating air there through said spacer material (124; 324; 424).

8. The vehicle seat (112) according to claim 6 or claim 7
**characterized in that** said
cushioning being of a shape having a main seating portion and bolsters (246) adjacent said main seating portion, a trench (248) being defined at an interface of said main seating portion and said bolster (246), said insert (110; 210; 310; 410; 510; 610) being sized to extend to adjacent said trench (248) whereby said main seating portion and said bolsters (246) are ventilated.

9. The vehicle seat (112) according to any of claims 6 to 8, **characterized in that** said non-air permeable spacer-cover (132; 332; 432; 532; 632) comprises a plastic material or a very poor air permeable non-woven material.

## Patentansprüche

1. Einsatz (110; 210; 310; 410; 510; 610) zur Belüftung eines Fahrzeugsitzes (112), der zum Einsetzen in eine Ausnehmung (122) in einem Sitzkissen (116; 216) oder eine Rückenlehne (118) vorgesehen ist, wobei der Einsatz (110; 210; 310; 410; 510; 610) ein luftdurchlässiges Abstandsteil (124; 324; 424) aufweist, das eine Oberseitenfläche (126), eine Unterseitenfläche (128) und eine Kantenfläche (130; 230) besitzt, wobei das Abstandteil (124; 324; 424) durch eine nicht-luftdurchlässige Abstandsteil-Hülle (132; 332; 432; 532; 632) ähnlich einer Tasche oder einem Beutel mit einem oberen Bereich (134, 534; 634), angeordnet benachbart an die Oberseitenfläche (126), und ein Unterseitenbereich (136; 536; 636), benachbart an die Unterseitenfläche (128) des Einsatzes, abgedeckt ist, und wobei die nicht-luftdurchlässige Abstandsteil-Hülle (132; 332; 432; 532; 632) mindestens eine Öffnung (138; 238; 338; 438; 538; 638) umfasst, **dadurch gekennzeichnet, dass** die mindestens eine Öffnung (138; 238; 338; 438; 538; 638) umfangsseitig um die Kantenfläche (130; 230) des Abstandsteils (124; 324; 424) angeordnet ist, um Luft durch die Öffnung (138; 238; 338; 438; 538; 638) zu kommunizieren, so dass die mindestens eine Öffnung oder jede der umfangsseitig angeordneten Öffnungen (138; 238; 338; 438; 538; 638) eines einer Einkerbung des oberen Bereichs (134; 534; 634), einer Einkerbung in dem Unterseitenbereich (136; 536; 636) und einer Einkerbung in sowohl dem oberen (134; 534; 634) als auch dem unteren Bereich (136; 536; 636) ist.

2. Einsatz (110; 210; 310; 410; 510; 610) nach Anspruch 1, **dadurch gekennzeichnet, dass** der obere (134; 534; 634) und der untere Bereich (136; 536; 636) umfangsseitig verbunden sind.

3. Einsatz (110; 210; 310; 410; 510; 610) nach Anspruch 1 oder Anspruch 2, **dadurch gekennzeichnet, dass** die nicht-luftdurchlässige Abstandsteil-Hülle (132; 332; 432; 532; 632) ein Kunststoffmaterial oder ein sehr schlecht luftdurchlässiges Vlies-Material aufweist.

4. Einsatz (110; 210; 310; 410; 510; 610) nach Anspruch 1, **dadurch gekennzeichnet, dass** die nicht-luftdurchlässige Abstandsteil-Hülle (132; 332; 432; 532; 632) auch mindestens eine Luftzuführöffnung (140) aufweist, die benachbart an die Unterseitenfläche (128) ausgerichtet ist, um Luft dort durch das Abstandsmaterial (124; 324; 424) zu kommunizieren.

5. Einsatz (110; 210; 310; 410; 510; 610) nach Anspruch 4, **dadurch gekennzeichnet, dass** die nicht-luftdurchlässige Abstandsteil-Hülle (132; 332; 432; 532; 632) ein Kunststoffmaterial oder ein sehr schlecht luftdurchlässiges Vlies-Material aufweist.

6. Belüfteter Fahrzeugsitz (112), der einen Rahmen (114), eine Polsterung mit einem Sitzkissen (116; 216) und einer Rückenlehne (118), die an dem Rahmen gehalten ist, und eine luftdurchlässige Hülle (120; 220), die das Kissen (116; 216; 118) umhüllt, und einen Einsatz (110; 210; 310; 410; 510; 610), der in einer Ausnehmung (122) in dem Sitzkissen (116; 216) und/oder der Rückenlehne (118) positioniert ist, besitzt, wobei der Einsatz (110; 210; 310; 410; 510; 610) ein luftdurchlässiges Abstandsteil (124; 324; 424) aufweist, das eine Oberseitenfläche (126), eine Unterseitenfläche (128) und eine Kantenfläche (130) besitzt, wobei das Abstandteil (124; 324; 424) durch eine nicht-luftdurchtässige Abstandsteil-Hülle (132; 332; 432; 532; 632) ähnlich einer Tasche oder einem Beutel mit einem oberen Bereich (134, 534; 634), angeordnet benachbart an die Oberseitenfläche (126), und ein Unterseitenbereich (136; 536; 636), benachbart an die Unterseitenfläche (128) des Einsatzes, abgedeckt ist, und wobei die nicht-luftdurchlässige Abstandsteil-Hülle (132; 332; 432; 532; 632) mindestens eine Öffnung (138; 238; 338; 438; 538; 638) umfasst, **dadurch gekennzeichnet, dass** die mindestens eine Öffnung (138; 238; 338; 438; 538; 638) umfangsseitig um die Kantenfläche (130) des Abstandsteils (124; 324; 424) angeordnet ist, um Luft durch die Öffnung (138; 238; 338; 438; 538; 638) zu kommunizieren, so dass die mindestens eine Öffnung oder jede der umfangsseitig angeordneten Öffnungen (138; 238; 338; 438; 538; 638) eines einer Einkerbung des oberen Bereichs (134; 534; 634), einer Einkerbung in dem Unterseitenbereich (136; 536; 636) und einer Einkerbung in sowohl dem oberen (134; 534; 634) als auch dem unteren Bereich (136; 536; 636) ist.

7. Fahrzeugsitz (112) nach Anspruch 6, **dadurch gekennzeichnet, dass** die Abstandsteil-Hülle (132; 332; 432; 532; 632) auch mindestens eine Luftzuführöffnung (140) umfasst, die benachbart an die Unterseitenfläche (128) ausgerichtet ist, um Luft durch das Abstandsmaterial (124; 324; 424) zu kommunizieren.

8. Fahrzeugsitz (112) nach Anspruch 6 oder Anspruch 7, **dadurch gekennzeichnet, dass** die Polsterung von einer Form ist, die einen Hauptsitzbereich und Wangenteil (246) benachbart dem Hauptsitzbereich, einen Graben (248), der an einer Verbindungsstelle des Hauptsitzbereichs und dem Keilkissen (246) festgelegt ist, wobei der Einsatz (110; 210; 310; 410; 510; 610) so dimensioniert ist, dass er sich benachbart dem Graben (248) erstreckt, wodurch der Hauptsitzbereich und die Keilkissen (246) belüftet sind.

9. Fahrzeugsitz (112) nach einem der Ansprüche 6 bis 8, **dadurch gekennzeichnet, dass** die nicht-luftdurchlässige Abstandsteil-Hülle (132; 332; 432; 532; 632) ein Kunststoffmaterial oder ein sehr schlecht luftdurchlässiges Vlies-Material aufweist.

## Revendications

1. Insert (110; 210; 310; 410; 510; 610) pour ventiler un siège de véhicule (112), fourni en vue d'être inséré dans un renfoncement (122) dans un coussin de siège (116; 216) ou un dossier de siège (118), ledit insert (110; 210; 310; 410; 510; 610) comprenant un espaceur perméable à l'air (124; 324; 424) ayant une surface supérieure (126), une surface inférieure (128) et une surface de bord (130; 230), dans lequel l'espaceur (124; 324; 424) est recouvert par une couverture-espaceur non perméable à l'air (132; 332; 432; 532; 632) comme une poche ou une pochette ayant une partie supérieure (134; 534; 634) agencée de manière adjacente à ladite surface supérieure (126) et une partie inférieure (136; 536; 636) agencée de manière adjacente à ladite surface inférieure (128) de l'insert, et dans lequel ladite couverture-espaceur non perméable à l'air (132; 332; 432; 532; 632) comprend au moins une ouverture (138; 238; 338; 438; 538; 638), **caractérisé en ce que** la au moins une ouverture (138; 238; 338; 438; 538; 638), étant agencée en périphérie autour de ladite surface de bord (130; 230) dudit espaceur (124; 324; 424) pour transmettre de l'air autour de ladite ouverture (138; 238; 338; 438; 538; 638), de sorte que la au moins une ouverture ou ladite chacune desdites ouvertures agencées en périphérie (138; 238; 338; 438; 538; 638) soit un élément parmi une indentation de ladite partie supérieure (134; 534; 634), une indentation dans ladite partie inférieure (136; 536; 636) et une indentation dans les deux parties à la fois ladite partie supérieure (134; 534; 634) et la partie inférieure (136; 536; 636).

2. Insert (110; 210; 310; 410; 510; 610) selon la revendication 1, **caractérisé en ce que** lesdites parties supérieure (134; 534; 634) et inférieure (136; 536; 636) sont jointes en périphérie.

3. Insert (110; 210; 310; 410; 510; 610) selon la revendication 1 ou la revendication 2, **caractérisé en ce que** ladite couverture-espaceur non perméable à l'air (132; 332; 432; 532; 632) comprend un matériau en plastique ou un matériau non tissé très peu perméable à l'air.

4. Insert (110; 210; 310; 410; 510; 610) selon la revendication 1, **caractérisé en ce que** ladite couverture- espaceur non perméable à l'air (132; 332; 432; 532; 632) comprend également au moins une ouverture d'amenée d'air (140) alignée de manière adjacente à ladite surface inférieure (128) pour transmettre de l'air à travers ledit matériau espaceur (124; 324; 424).

5. Insert (110; 210; 310; 410; 510; 610) selon la revendication 4, **caractérisé en ce que** ladite couverture-espaceur non perméable à l'air (132; 332; 432; 532; 632) comprend un matériau en plastique ou un matériau non tissé très peu perméable à l'air.

6. Siège de véhicule ventilé (112) doté d'un cadre (114), d'un capitonnage avec un coussin de siège (116; 216) et un dossier de siège (118) soutenu sur ledit cadre et d'une couverture perméable à l'air (120; 220) recouvrant ledit coussin (116; 216; 118) et d'un insert (110; 210; 310; 410; 510; 610) positionné dans un renfoncement (122) dans ledit siège de coussin (116; 216) et/ou ledit dossier de siège (118), ledit insert (110; 210; 310; 410; 510; 610) comprenant un espaceur perméable à l'air (124; 324; 424) ayant une surface supérieure (126), une surface inférieure (128) et une surface de bord (130), dans lequel l'espaceur (124; 324; 424) est recouvert par une couverture-espaceur non perméable à l'air (132; 332; 432; 532; 632) comme une poche ou une pochette ayant une partie supérieure (134; 534; 634) agencée de manière adjacente à ladite surface supérieure (126) et une partie inférieure (136; 536; 636) agencée de manière adjacente à ladite surface inférieure (128) de l'insert, et dans lequel ladite couverture-espaceur non perméable à l'air (132; 332; 432; 532; 632) comprend au moins une ouverture (138; 238; 338; 438; 538; 638), **caractérisé en ce que** la au moins une ouverture (138; 238; 338; 438; 538; 638), agencée en périphérie autour de ladite surface de bord (130) dudit espaceur (124; 324; 424) pour transmettre de l'air autour de ladite ouverture (138; 238; 338; 438; 538; 638), de sorte que la au moins une ouverture ou ladite chacune desdites ouvertures agencées en périphérie (138; 238; 338; 438; 538; 638) soit un élément parmi une indentation de ladite partie supérieure (134; 534; 634), une indentation dans ladite partie inférieure (136; 536; 636) et une indentation dans les deux parties à la fois ladite partie supérieure (134; 534; 634) et la partie inférieure (136; 536; 636).

7. Siège de véhicule (112) selon la revendication 6, **caractérisé en ce que** la couverture-espaceur (132; 332; 432; 532; 632) comprend également au moins une ouverture d'amenée d'air (140) alignée de manière adjacente à ladite surface inférieure (128) pour transmettre de l'air à travers ledit matériau espaceur (124; 324; 424).

8. Siège de véhicule (112) selon la revendication 6 ou la revendication 7, **caractérisé en ce que** ledit capitonnage est d'une forme comprenant une partie d'assise principale et des traversins (246) adjacents à ladite partie d'assise principale, une tranchée (248) étant définie à une interface de ladite partie d'assise principale et dudit traversin (246), ledit insert (110; 210; 310; 410; 510; 610) étant dimensionné de façon à s'étendre à ladite tranchée adjacente (248) moyennant quoi ladite partie d'assise principale et lesdits traversins (246) sont ventilés.

9. Siège de véhicule (112) selon l'une quelconque des revendications 6 à 8, **caractérisé en ce que** ladite couverture-espaceur non perméable à l'air (132; 332; 432; 532; 632) comprend un matériau en plastique ou un matériau non tissé très peu perméable à l'air.
